# EUROPÄISCHE PATENTSCHRIFT

(11) **EP 2 238 661 B1**
(45) Veröffentlichungstag und Bekanntmachung des Hinweises auf die Patenterteilung: **02.01.2019**
(21) Anmeldenummer: 09706512.2
(22) Anmeldetag: 24.01.2009
(51) Int. Cl.: H02B 1/38

(54) **VANDALISMUSSICHERER SCHRANK**
VANDALISM-SAFE CABINET
ARMOIRE SÉCURISÉE CONTRE LE VANDALISME

(30) Priorität: 28.01.2008 DE 102008006408
(43) Veröffentlichungstag der Anmeldung: 13.10.2010
(73) Patentinhaber: EMKA BESCHLAGTEILE GmbH & Co. KG, 42551 Velbert (DE)
(72) Erfinder: RUNGE, Friedhelm, 42285 Wuppertal (DE)
(74) Vertreter: Feucker, Max Martin
(86) Internationale Anmeldenummer: PCT/EP2009/000452
(87) Internationale Veröffentlichungsnummer: WO 2009/095191

(56) Entgegenhaltungen:
- EP-A1- 0 947 654
- EP-A1- 1 180 744
- DE-U1- 20 204 858
- US-A1- 2002 167 251

## Beschreibung

Die Erfindung betrifft einen Outdoor-Schrank zur Aufnahme von vorzugsweise elektrischen Komponenten.

Soweit derartige Outdoor-Schränke insbesondere außerhalb von Gebäuden aufgestellt sind, besteht die Forderung, dass derartige Schränke über einen vorgegebenen Zeitraum Versuchen einer gewaltsamen Öffnung mittels Handwerkzeugen widerstehen müssen. Eine Schwachstelle in dem Aufbau eines jeweils aus Seitenwänden und wenigstens einer Tür bestehenden Schrankkorpus stellt jeweils die Tür mit einerseits ihrer Scharnieranbindung an den Schrankkorpus und andererseits mit ihrem in der Regel nur einzelne Verriegelungspunkte mit dem Schrankkorpus aufweisenden Schließmechanismus dar. Insofern werden bei gewaltsamen Öffnungsversuchen entsprechend eingesetzte Handwerkzeuge im Türbereich des Schrankes angesetzt, um diese Schwachstelle auszunutzen, die Tür entweder an ihrer Scharnierseite oder an der Seite ihres Schließmechanismus aufzuhebeln.

Hierzu ist es aus der EP 0 947 654 A1 bekannt, eine Tür mittels eines sogenannten Verschwindscharniers am Schrank anzuschlagen, welches von außen nicht sichtbar ist. Andere für die Türfunktion erforderliche Bauteile sind in der Druckschrift nicht angesprochen.

Ferner ist in der US 2002/0167251 A1 eine Verstärkung der die Türscharniere und Schließmechanismen für eine Tür aufnehmenden Schrankbereiche beschrieben.

Ein sowohl elektrisch als auch mittels Schlüssel zu betätigender Schließmechanismus zum Verriegeln einer Tür mit einem Schrankkorpus ist in der EP 1 180 744 A1 beschrieben, wobei die Tür aufgrund an ihrer Außenseite befindlicher Funktionsteile für eine Öffnung mittels Schlüssel als Schwachstelle für eine gewaltsame Türöffnung zu erkennen ist.

In der DE 202 04 858 U1 ist schließlich der Aufbau eines elektrisch bzw. elektronisch zu betreibenden Überwachungs- und Steuerungssystems für einen Schaltschrank beschrieben, ohne dass auf den konstruktiven Aufbau des Schaltschrankes eingegangen ist.

Der Erfindung liegt daher die Aufgabe zugrunde, einen Outdoor-Schrank so auszubilden, dass eine gewaltsame Öffnung des Schrankes erschwert beziehungsweise der Zeitraum, in welchem der Schrank einem gewaltsamen Öffnungsversuch widersteht, verlängert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Schrankkorpus aus zwischen jeweils zwei äußeren Eckpfosten gehaltenen Seitenwänden und zumindest einer zwischen zwei Eckpfosten angeordneten Tür aufgebaut ist, wobei die Tür auf ihrer Außenseite kein Funktionsteil aufweist und optisch in Übereinstimmung mit den Seitenwänden des Schrankes ausgebildet ist und die der Halterung der Tür an einem Eckpfosten dienenden Scharniere sowie der zur Verriegelung der Tür mit dem anderen Eckpfosten eingerichtete Schließmechanismus jeweils im Inneren des Schrankes angeordnet sind, und wobei das Profil der Eckpfosten in den Ebenen des Anschlusses von zwei Seitenwänden oder einer Tür und einer Seitenwand jeweils identisch ausgebildet ist, so dass sich ein gleiches Erscheinungsbild des Überganges zwischen den Eckpfosten und den Anschlüssen des Profils von Seitenwänden und/oder Tür aus allen Blickwinkeln ergibt. Die Erfindung schlägt somit vor, den betreffenden Schrank so auszugestalten, dass von außen nicht erkennbar ist, an welcher Seite sich die Tür befindet, da der Schrank erfindungsgemäß aus allen Blickwinkeln von außen ein identisches Erscheinungsbild liefert.

Wird an einem solchen erfindungsgemäß ausgebildeten Schrank ein gewaltsamer Öffnungsversuch unternommen, der sich naturgemäß in der Regel auf den Übergangsbereich zwischen einem Eckpfosten und einem daran angeschlossenen Wandbereich richtet, so besteht zunächst die Möglichkeit, dass ein potentieller Täter an einer Stelle des Schrankkorpus ansetzt, an welcher eine Seitenwand mit einem Eckpfosten verbunden ist. Da der Anschluss einer Seitenwand an einen Eckpfosten über deren gesamte Verbindungshöhe einheitlich ausgeführt ist beziehungsweise sein kann, widersteht ein Schrankkorpus an dieser Stelle gewaltsamen Öffnungsversuchen wesentlich länger als in seinem Türbereich. Insofern führt ein Öffnungsversuch an dieser Stelle nicht zum Ziel, und der Täter müsste anschließend den Angriffspunkt ändern, was entsprechend Zeit kostet. Aber auch dann, wenn ein potentieller Täter mit seinem gewaltsamen Öffnungsversuch zufällig sogleich an der Tür ansetzt, ist für ihn nicht erkennbar, an welcher Seite sich die Scharnierseite beziehungsweise der Schließmechanismus der Tür befindet, da auch hier noch Unterschiede in der Widerstandsfähigkeit der betreffenden Bauteile gegen eine gewaltsame Öffnung bestehen können. Insgesamt ist es somit in vorteilhafter Weise zeitaufwendiger, eine gewaltsame Öffnung des Schrankes durchzuführen, beziehungsweise auch schwieriger, zielgerichtet einen derartigen gewaltsamen Öffnungsversuch zu unternehmen.

Um das gleiche Erscheinungsbild des Schrankes aus allen Blickwinkeln zu realisieren, ist erfindungsgemäß vorgesehen, dass das Profil der Eckposten in den Ebenen des Anschlusses von zwei Seitenwänden oder einer Tür und einer Seitenwand jeweils identisch ausgebildet ist. Da für die Ausbildung der eingesetzten Seitenwände beziehungsweise der zugehörigen Türen jedes passende Profil zum Einsatz gebracht werden kann, kommt es jeweils auf das Erscheinungsbild des Überganges zwischen den Eckpfosten und den Anschlüssen des Profils von Seitenwänden und/oder Tür an.

Die Erfindung lässt sich nicht nur bei außerhalb von Gebäuden stehenden Schränken anwenden, sondern selbstverständlich auch an Schränken, die innerhalb von Gebäuden aufgestellt werden, soweit es darum geht, eine entsprechende Sicherheit gegen gewaltsame Öffnung bei einem derartigen Schrank zu gewährleisten.

Soweit bei einem erfindungsgemäßen Schrank die Anbringung von außen sichtbaren Funktionsteilen ausgeschlossen ist, die zur mechanischen Betätigung eines Schließmechanismus herangezogen werden könnten, ist erfindungsgemäß vorgesehen, dass der Schließmechanismus der Tür mit einer elektrisch arbeitenden Türverriegelung ausgeführt ist. Soweit derartige elektrisch arbeitende Türverriegelungen im Stand der Technik bekannt sind, sind im Rahmen der Erfindung alle entsprechend ausgelegten Ausführungen von Türverriegelungen einsetzbar, die einem Fachmann für eine Auswahl zur Verfügung stehen oder von diesem entwickelt beziehungsweise weiter entwickelt werden.

Zur Betätigung eines solchermaßen ausgelegten Schließmechanismus mit einer elektrisch arbeitenden Türverriegelung kann nach einem Ausführungsbeispiel vorgesehen sein, dass der Schließmechanismus über ein in den Schrank hinein geführtes Signalkabel auslösbar ist. Hierdurch ist nicht erkennbar, an welcher Stelle des Schrankkorpus sich der Schließmechanismus einer eingesetzten Tür befindet.

In einer alternativen Ausführungsform der Erfindung ist vorgesehen, dass der Schließmechanismus berührungslos über ein an ein im Inneren des Schrankes angeordnetes Empfängerteil im Bereich der Schrankaußenseite heranzuführendes Senderteil auslösbar ist, wobei das Empfängerteil an einer beliebigen Stelle des Schrankkorpus in einer an der Außenseite des Schrankes nicht erkennbaren Position angebracht ist, vorzugsweise gerade nicht im Türbereich. Dies bedeutet, dass die zur Türöffnung berechtigten Personen eine Information darüber zur Verfügung haben müssen, an welcher Stelle sich das Empfängerteil im Inneren des Schrankes befindet, damit das Senderteil an die passende Stelle auf der Außenseite des Schrankes gebracht werden kann.

Soweit das Vermeiden von außen sichtbaren Funktionsteilen im Türbereich eines erfindungsgemäßen Schrankes auch bedeutet, dass zur Aufhängung der Tür an einem Eckpfosten innenliegende Scharniere vorgesehen sein müssen, sind derartige innenliegende Scharniere im Stand der Technik ebenfalls in unterschiedlichen Ausführungsformen bekannt und stehen dem Durchschnittsfachmann für einen Einsatz zur Verfügung. Insofern kommt es für die Verwirklichung der Erfindung auf die konstruktive Auslegung der eingesetzten innenliegenden Scharniere nicht an. Die entsprechende Auswahl richtet sich nach der Ausbildung des Profils der Eckpfosten beziehungsweise des Türprofils. Dabei sind erfindungsgemäß die im Inneren des Schrankes angeordneten Scharniere so auszulegen, dass ein Öffnungswinkel der Tür von 180 Grad ermöglicht ist.

Hierbei kann nach einem Ausführungsbeispiel der Erfindung vorgesehen sein, dass das Profil der Eckpfosten sich in den Ebenen des Anschlusses von zwei Seitenwänden oder einer Tür und einer Seitenwand jeweils mit der Seitenwand und/oder der Tür überlappt. Hiermit ist ein Spalt zwischen Seitenwand beziehungsweise Tür und dem angeschlossenen Eckpfosten vermieden, soweit ein solcher Spalt sich zum Ansatz eines Handwerkzeuges eignet.

In einer alternativen Ausführungsform kann vorgesehen sein, dass das Profil der Eckpfosten in den Ebenen des Anschlusses von zwei Seitenwänden oder einer Tür und einer Seitenwand jeweils einen hakenförmigen Rücksprung zur ebenengleichen Einpassung des Seitenwandprofils und/oder des Türprofils aufweist. Zwar ist bei einer solchen Ausbildung ein Spalt zwischen dem Eckpfosten und dem angeschlossenen Profil von Seitenwand oder Tür gegeben, jedoch bedeutet die Hakenausführung des Rücksprunges, dass die Profile von Seitenwand und Tür gegen den Haken anliegen und insoweit in ihrem Anschluss an das Profil des Eckpfostens stabilisiert sind.

Soweit auch jedes beliebige Eckpfostenprofil mit einer ausreichenden Stabilität eingesetzt werden kann, besteht erfindungsgemäß die Möglichkeit, dass die Eckpfosten aus einem Strangprofil abgelängt sind, so dass eine einfache Herstellung der Eckpfosten gegeben ist. Dabei kann in alternativen Ausführungsformen der Erfindung vorgesehen sein, dass das Strangprofil aus einem Aluminium besteht, oder dass die Eckpfosten als Blech-Biege-Teile ausgebildet sind, bei denen das Profil durch entsprechende Biegevorgänge ausgebildet ist.

In der Zeichnung sind Ausführungsbeispiele der Erfindung wiedergegeben, welche nachstehend beschrieben sind. Es zeigen:
- Fig. 1: einen Outdoor-Schrank in einer Gesamtansicht,
- Fig. 2: einen Eckpfosten des Schrankkorpus mit zwei daran angeschlossenen Seitenwänden in einer schematischen Darstellung,
- Fig. 3: den Eckpfosten gemäß Figur 2 mit einer an einer Seite daran angeschlossenen Seitenwand und einer an der anderen Seite angeschlossenen Tür,
- Fig. 4: ein anderes Ausführungsbeispiel eines Eckpfostens mit Seitenwandanschluss und Türanschluss bei geschlossener Tür,
- Fig. 5: den Gegenstand der Figur 4 bei geöffneter Tür,
- Fig. 6: ein weiteres Ausführungsbeispiel eines Eckpfostens mit Seitenwandanschluss und Türanschluss bei geschlossener Tür,
- Fig. 7: den Gegenstand der Figur 6 bei geöffneter Tür.

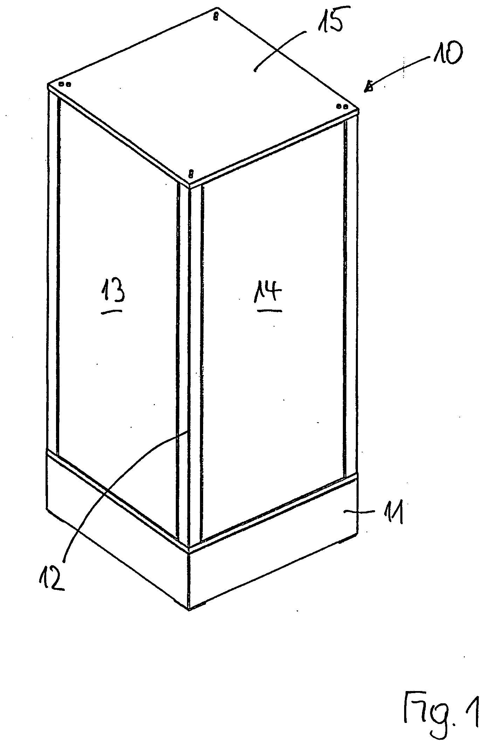

Der in Figur 1 dargestellte Schrank 10 weist einen Sockel 11 auf, auf dem Eckpfosten 12 stehen. Zwischen den Eckpfosten sind an drei Seiten des Schrankes jeweils Seitenwände 13 angeordnet und an die Eckpfosten 12 sowie an den Sockel 11 angeschlossen, während in gleicher Weise eine Tür 14 Bestandteil des Schrankes 10 ist. An seiner Oberseite ist der Schrank 10 durch eine Dachplatte 15 geschlossen. Obwohl Figur 1 nur eine Ansicht von zwei Schrankflächen zeigt, sind die nicht sichtbaren Schrankflächen in gleicher Weise wie die sichtbaren Schrankflächen ausgebildet, so dass sich aus jedem Blickwinkel eine identische Schrankansicht ergibt.

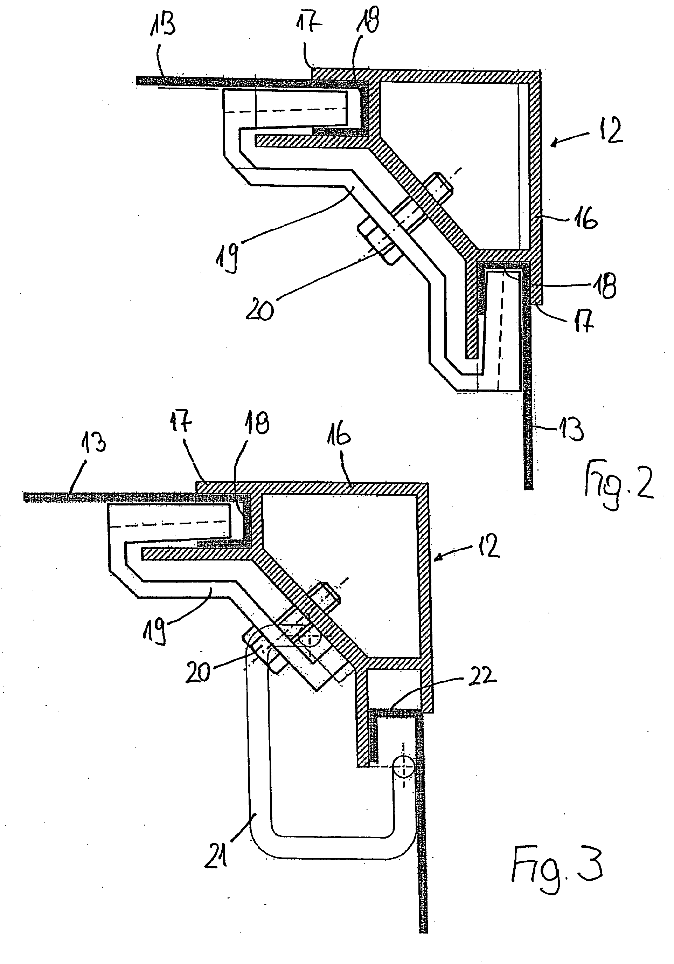

In Figur 2 ist ein erstes Ausführungsbeispiel der Ausbildung eines Eckpfostens mit zwei daran angeschlossenen Seitenwänden zu sehen. Das Profil 16 des dargestellten Eckpfostens 12 weist in der Ebene des Anschlusses von zwei Seitenwänden 13 jeweils U-förmige Profilansätze 17 auf, in welcher das ebenfalls an ihrem Anschlussende U-förmig umgebogene Profilende 18 der Seitenwand 13 einschiebbar ist, so dass sich eine formschlüssige Aufnahme des Profils der Seitenwand 13 in den seitlichen U-Profilen 17 des Eckpfostens 12 ergibt. Die Befestigung der beiden Seitenwände 13 an dem Eckpfosten 12 erfolgt durch eine Halteklammer 19, deren äußere Enden formschlüssig in das Seitenwandprofil eingreifen und somit das Endprofil 18 der Seitenwand 13 jeweils in dem seitlichen U-Profil 17 des Eckpfostens 12 festlegen. Die Halteklammer 19 ist über eine Verschraubung 20 mit dem Profil 16 des Eckpfostens 12 verbunden. Es versteht sich, dass über die Höhe des Schrankes 10 verteilt eine beliebige Anzahl von derartigen Halteklammern 19 angebracht sein kann, wodurch sich eine stabile Verbindung der Seitenwände13 mit dem Eckpfosten 12 ergibt.

Entsprechend ist in Figur 3 die Lösung dargestellt, in welcher an einen Eckpfosten 12 eine Seitenwand 13 und eine Tür 14 angeschlossen sind. Hinsichtlich der Befestigung der Seitenwand 13 an einem Eckpfosten 12 ist auf die zu Figur 2 beschriebene Lösung zurückgegriffen, wobei jeweils nur eine "halbe" Halteklammer 19 verwendet wird. Das Türprofil 22 der Tür 14 ist in gleicher Weise ausgebildet wie das Profilende 18 der Seitenwand 13, ragt mit Rücksicht auf die erforderliche Türöffnung aber nicht so weit in das U-Profil 17 des Eckpfostens 12 hinein. Von außen ist aber dieses Maß des Hineinragens nicht zu erkennen, so dass die entsprechende Ausbildung ohne Einfluss auf das äußere Erscheinungsbild des Schrankes 10 ist. Die Tür 14 ist mittels eines Scharniers 21 an dem Profil 16 des Eckpfostens 12 festgelegt, wobei das Scharnier 21 so ausgebildet ist, dass es das vorstehende U-Profil 17 des Eckpfostens 12 umgreift und somit ein Aufschwenken der Tür 14 ermöglicht.

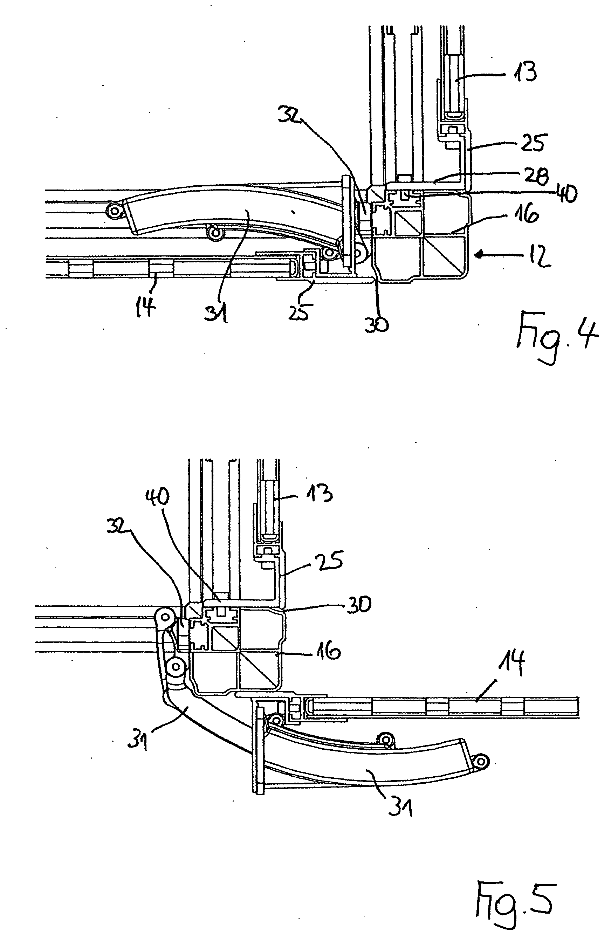

Bei dem in Figuren 4 und 5 dargestellten Ausführungsbeispiel weist der Eckpfosten 12 ein anders ausgestaltetes Eckpfostenprofil 16 auf, an welches ein Seitenwandhalter 28 über eine in eine Nut des Eckpfostenprofils 16 eingreifende Klemmschraubverbindung 40 angeschlossen ist. Auch bei diesem Ausführungsbeispiel ist das Profil der Seitenwand 13 in einem entsprechend ausgebildeten Anschlussstück 25 gehalten, welches mit einem Schenkel des Seitenwandhalters 28 verbunden ist. Bei diesem Ausführungsbeispiel entsteht an der Stoßstelle zwischen Seitenwand 13 und Eckpfosten 12 ein Spalt 30, der bei dem entsprechend ausgebildeten Anschluss der Tür 14 an den Eckpfosten 12 einen kleinen Spielraum für die Türöffnung gibt. Aus diesem Grunde ist der Spalt 30 auch bei dem Anschluss der Seitenwand 13 an den Eckpfosten 12 vorgesehen. Da der Spalt 30 aber durch den stabilen Seitenwandhalter 28 innen abgedeckt ist, ist damit eine Schwächung des Schrankkorpus nicht verbunden.

Entsprechend zu dem Anschluss der Seitenwand 13 an den Eckpfosten 12 ist auch die Tür 14 an den Eckpfosten 12 angeschlossen, wobei das Profil der Tür wiederum in ein Anschlussstück 25 angepasst ist, welches wiederum als Träger des eingesetzten Scharniers 31 fungiert. Eckpfostenseitig ist das als an sich bekanntes Getriebescharnier ausgebildete Scharnier 31 über ein Scharnierrahmenteil 32 mit dem Eckpfostenprofil verbunden.

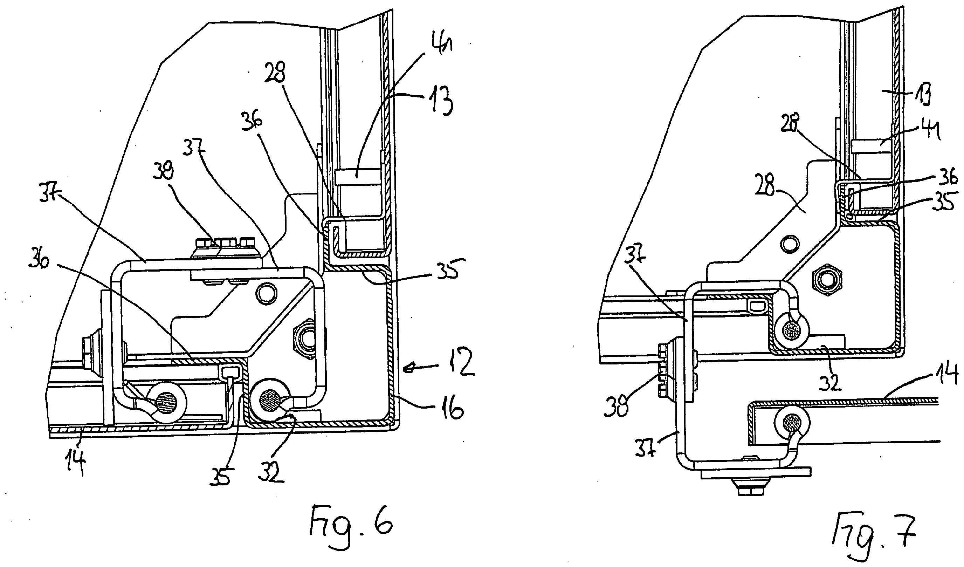

Während bei dem in Figuren 4 bis 5 dargestellten Ausführungsbeispiel vorzugsweise abgelängte Aluminiumprofile für die Eckpfosten 12 zum Einsatz kommen, zeigt das in Figuren 6 und 7 dargestellte Ausführungsbeispiel die Ausbildung eines Eckpfostens 12 als Blech-Biege-Teil. Hierzu weist das Eckpfostenprofil 16 in den beiden Ebenen des Anschlusses von Seitenwand 13 und Tür 14 jeweils einen Rücksprung 35 mit einer hakenförmig abstehenden Auflagerfläche 36 auf, wobei die beiden Rücksprünge 35 derart ausgebildet sind, dass sich die Profile von Seitenwand 13 und Tür 14 ebenengleich mit der Außenseite des Eckpfostens 12 einpassen. An dem Eckpfostenprofil 16 sind jeweils wieder Seitenwandhalter 28 in Form von Klemmblechen angeschlossen, wobei zur Verbindung des Seitenwandhalters 28 mit der Seitenwand 13 Schweißbolzenverbindungen 41 vorgesehen sind.

Türseitig ist zur Halterung des diesbezüglichen Scharniers wiederum ein Scharnierrahmenteil 32 an dem Eckpfostenprofil 16 vorzugsweise angeschweißt, wobei das wiederum winkelförmig ausgebildete Scharnier aus zwei winkligen Scharnierteilen 37 besteht, die durch eine Verbindungsverschraubung 38 miteinander verbunden sind. Die beiden Scharnierbügel 37 sind dabei so ausgebildet, dass ein Aufschwenken der Tür 14 um die vom Rücksprung 35 ausgehende Auflagerfläche 36 herum möglich ist.

Bei allen dargestellten Ausführungsbeispielen ist dafür Sorge getragen, dass die im Inneren des jeweiligen Schrankes angeordneten Scharniere einen Öffnungswinkel der Tür von 180 Grad ermöglichen, was gegebenenfalls in Abhängigkeit von den eingesetzten Eckpfostenprofilen eine entsprechende Auslegung der Scharniere bedingt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Outdoor-Schrank (10) zur Aufnahme von vorzugsweise elektrischen Komponenten, dessen Schrankkorpus aus zwischen jeweils zwei äußeren Eckpfosten (12) gehaltenen Seitenwänden (13) und zumindest einer zwischen zwei Eckpfosten (12) angeordneten Tür (14) aufgebaut ist, wobei die Tür (14) auf ihrer Außenseite kein Funktionsteil aufweist und optisch in Übereinstimmung mit den Seitenwänden (13) des Schrankes (10) ausgebildet ist und die der Halterung der Tür (14) an einem Eckpfosten (12) dienenden Scharniere sowie der zur Verriegelung der Tür (14) mit dem anderen Eckpfosten (12) eingerichtete Schließmechanismus jeweils im Inneren des Schrankes (10) angeordnet sind, und wobei das Profil (16) der Eckpfosten (12) in den Ebenen des Anschlusses von zwei Seitenwänden (13) oder einer Tür (14) und einer Seitenwand (13) jeweils identisch ausgebildet ist, so dass sich ein gleiches Erscheinungsbild des Überganges zwischen den Eckpfosten (12) und den Anschlüssen des Profils von Seitenwänden (13) und/oder Tür (14) aus allen Blickwinkeln ergibt, bei welchem der Schließmechanismus der Tür (14) mit einer elektrisch arbeitenden Türverriegelung ausgeführt ist.

2. Outdoor-Schrank nach Anspruch 1, bei welchem der Schließmechanismus über ein in den Schrank (10) hinein geführtes Signalkabel auslösbar ist.

3. Outdoor-Schrank nach Anspruch 1 oder 2, bei welchem der Schließmechanismus berührungslos über ein an ein im Inneren des Schrankes (18) angeordnetes Empfängerteil im Bereich der Schrankaußenseite heranzuführendes Senderteil auslösbar ist.

4. Outdoor-Schrank nach Anspruch 3, bei welchem das Empfängerteil an einer beliebigen Stelle des Schrankkorpus in einer an der Außenseite des Schrankes (10) nicht erkennbaren Position angebracht ist.

5. Outdoor-Schrank nach einem der Ansprüche 1 bis 4, bei welchem die im Inneren des Schrankes (10) angeordneten Scharniere (21, 31, 37) einen Öffnungswinkel der Tür (14) von 180 Grad ermöglichen.

6. Outdoor-Schrank nach einem der Ansprüche 1 bis 5, bei welchem das Profil (16) der Eckpfosten (12) sich in den Ebenen des Anschlusses von zwei Seitenwänden (13) oder einer Tür (14) und einer Seitenwand (13) jeweils mit der Seitenwand (13) und/oder der Tür (14) überlappt.

7. Outdoor-Schrank nach einem der Ansprüche 1 bis 5, bei welchem das Profil (16) der Eckpfosten (12) in den Ebenen des Anschlusses von zwei Seitenwänden (13) oder einer Tür (14) und einer Seitenwand (13) jeweils einen hakenförmigen Rücksprung (35) zur ebenengleichen Einpassung des Seitenwandprofils und/oder des Türprofils aufweist.

8. Outdoor-Schrank nach einem der Ansprüche 1 bis 7, bei welchem die Eckpfosten (12) aus einem Strangprofil abgelängt sind.

9. Outdoor-Schrank nach Anspruch 8, bei welchem das Strangprofil aus Aluminium besteht.

10. Outdoor-Schrank nach einem der Ansprüche 1 bis 7, bei welchem die Eckpfosten (12) als Blech-Biege-Teile ausgebildet sind.

## Claims

1. Outdoor cabinet (10) for accommodating preferably electrical components, the cabinet body of which is composed of side walls (13) held between respectively two outer corner posts (12) and at least one door (14) arranged between two corner posts (12), wherein the door (14) on its outer side has no functional part and is optically designed to match the side walls (13) of the cabinet (10) and the hinges serving to support the door (14) on a corner post (12) as well as the closing mechanism locking the door (14) with the other corner post (12) are each arranged in the interior of the cabinet (10) and wherein the profile (16) of the corner posts (12) in the planes of connection of two side walls (13) or of a door (14) and a side wall (13) are each identically designed so that a uniform appearance of the transition between the corner posts (12) and the connections of the profile of side walls (13) and/or door (14) results from all perspectives, in which the closing mechanism of the door (14) is designed with an electrically operating door lock.

2. Outdoor cabinet according to claim 1 in which the closing mechanism is activated by way of a signal cable introduced into the inside of the cabinet (10).

3. Outdoor cabinet according to claim 1 or 2 in which the closing mechanism can be activated via an emitter component to be brought into contactless proximity, on the outside of the cabinet, of a receiver component arranged in the interior of the cabinet (18).

4. Outdoor cabinet according to claim 3 in which the receiver component is arranged at any point of the cabinet body in a position not recognisable on the outside of the cabinet (10).

5. Outdoor cabinet according to any one of claims 1 to 4 in which the hinges (21, 31, 37) arranged in the interior of the cabinet (10) allow an opening angle of the door (14) of 180 degrees.

6. Outdoor cabinet according to any one of claims 1 to 5 in which the profile (16) of the corner posts (12) overlaps in the plane of the connection of two side walls (13) or a door (14) and of a side wall (13) respectively with the side wall (13) and/or the door (14).

7. Outdoor cabinet according to any one of claims 1 to 5 in which the profile (16) of the corner posts (12) in the planes of the connection of two side walls (13) or a door (14) and a side wall (13) has in each case a hook-shaped recess (35) for the even fitting in of the side wall profile and/or the door profile.

8. Outdoor cabinet according to any one of claims 1 to 7 in which the corner posts (12) are cut to length from an extruded profile.

9. Outdoor cabinet according to claim 8 wherein the extruded profile is made of aluminium.

10. Outdoor cabinet according to any one of claims 1 to 7 in which the corner posts (12) are designed as sheet metal bent components.

## Revendications

1. Armoire extérieure (10) destinée à recevoir de préférence des composants électriques, dont le corps d'armoire est structuré en parois latérales (13) maintenues chaque fois entre deux montants d'angle (12) et en au moins une porte (14), maintenue entre deux montants d'angle (12), sur sa face extérieure, la porte (14) ne comportant aucun élément fonctionnel et étant conçue visuellement en accord avec les parois latérales (13) de l'armoire (10) et les charnières servant à la fixation de la porte (14) sur un montant d'angle (12) ainsi que le mécanisme de fermeture servant au verrouillage de la porte (14) avec l'autre montant d'angle (12) étant placés chacun à l'intérieur de l'armoire (10) et le profilé (16) des montants d'angle (12) dans les plans du raccordement de deux parois latérales (13) ou d'une porte (14) et d'une paroi latérale (13) étant chaque fois conçu à l'identique, de sorte à obtenir une même apparence du passage entre les montants d'angle (12) et les raccordements du profilé de parois latérales (13) et/ou de la porte (14) à partir de tous les angles de vision, sur laquelle le mécanisme de fermeture de la porte (14) est réalisé avec un verrouillage de porte à fonctionnement électrique.

2. Armoire extérieure selon la revendication 1, sur laquelle le mécanisme de fermeture est déclenchable par l'intermédiaire d'un câble de signal tiré à l'intérieur de l'armoire (10).

3. Armoire extérieure selon la revendication 1 ou 2, sur laquelle le mécanisme de fermeture est déclenchable sans contact par l'intermédiaire d'un élément émetteur devant être conduit dans la zone de la face extérieure de l'armoire vers un élément récepteur placé à l'intérieur de l'armoire (18).

4. Armoire extérieure selon la revendication 3, sur laquelle l'élément récepteur est placé en un endroit quelconque du corps de l'armoire, dans une position non identifiable sur la face extérieure de l'armoire (10).

5. Armoire extérieure selon l'une quelconque des revendications 1 à 4, sur laquelle les charnières (21, 31, 37) placées à l'intérieur de l'armoire (10) permettent un angle d'ouverture de la porte (14) de 180 degrés.

6. Armoire extérieure selon l'une quelconque des revendications 1 à 5, sur laquelle, dans les plans du raccordement de deux parois latérales (13) ou d'une porte (14) et d'une paroi latérale (13), le profilé (16) des montants d'angle (12) se chevauche chaque fois avec la paroi latérale (13) et/ou la porte (14).

7. Armoire extérieure selon l'une quelconque des revendications 1 à 5, sur laquelle, dans les plans du raccordement de deux parois latérales (13) ou d'une porte (14) et d'une paroi latérale (13), le profilé (16) des montants d'angle (12) comporte respectivement un retrait (35) en forme de crochet, pour l'emboîtement à fleur du profilé de paroi latérale et/ou du profilé de porte.

8. Armoire extérieure selon l'une quelconque des revendications 1 à 7, sur laquelle les montants d'angle (12) sont sectionnés à partir d'un profilé extrudé.

9. Armoire extérieure selon la revendication 8, sur laquelle le profilé extrudé est en aluminium.

10. Armoire extérieure selon l'une quelconque des revendications 1 à 7, sur laquelle les montants d'angle (12) sont réalisés en pièce de tôle pliées.
